Europäisches Patentamt

European Patent Office

Office européen des brevets

(19)

(11) Veröffentlichungsnummer: **0 373 155**
**A2**

(12) **EUROPÄISCHE PATENTANMELDUNG**

(21) Anmeldenummer: **90103412.4**

(22) Anmeldetag: **20.05.87**

(51) Int. Cl.⁵: **F16L 55/05**

Diese Anmeldung is am 22 - 02 - 1990 als Teilanmeldung zu der unter INID-Kode 60 erwähnten Anmeldung eingereicht worden.

(30) Priorität: **11.06.86 CH 2362/86**

(43) Veröffentlichungstag der Anmeldung:
**13.06.90 Patentblatt 90/24**

(60) Veröffentlichungsnummer der früheren
Anmeldung nach Art. 76 EPÜ: **0 249 067**

(84) Benannte Vertragsstaaten:
**AT CH DE ES FR IT LI NL SE**

(71) Anmelder: **R. Nussbaum AG**
**Martin-Disteli-Strasse 26**
**CH-4601 Olten(CH)**

(72) Erfinder: **Martin, Kurt**
**Hofmattweg 2**
**CH-4450 Sissach(CH)**

(74) Vertreter: **Keller, Hartmut et al**
**Hartmut Keller Dr. René Keller Postfach 12**
**CH-3000 Bern 7(CH)**

(54) **Vorrichtung zum Dämpfen von Druckstössen in Rohrleitungen, insbesondere Sanitärinstallationen.**

(57) Das Gehäuse (1) des Druckstossdämpfers hat zwei Rohranschlussteile (2, 3) und einen mit diesen in Verbindung stehenden Raum, in dem eine mit Druckluft gefüllte Kammer (57-59) mit teilweise biegsamer Wandung angeordnet ist. Die biegsame Wandung besteht aus einer tiefgezogenen und nach dem Tiefziehen weichgeglühten Aluminiumfolie (58; 67), die an einem gummielastischen, aus einem Elastomer gebildeten Organ (57; 66) angeordnet und so dünn bemessen ist, dass sie dessen Verformbarkeit nicht beeinträchtigt.

Die Vorrichtung dämpft die in Hausinstallationen infolge des raschen Schliessens von Schnellverschlussorganen, z. B. Hebelmischern, entstehenden Druckstösse. Durch das Zusammenwirken der tiefgezogenen und nach dem Tiefziehen weichgeglühten Aluminiumfolie mit dem Elastomer-Organ wird die für Hausinstallationen erforderliche Langzeitdichtigkeit auch bei hoher Druckstoss-Beanspruchung gewährleistet.

FIG. 4

## Vorrichtung zum Dämpfen von Druckstössen in Rohrleitungen, insbesondere Sanitärinstallationen

Die Erfindung betrifft eine Vorrichtung zum Dämpfen von Druckstössen in Rohrleitungen, insbesondere Sanitärinstallationen, gemäss dem Oberbegriff des Patentanspruchs 1.

Eine Vorrichtung dieser Art ist aus der US-A 4 129 025 (Carey) bekannt. Die biegsame metallische Wandung der Druckluftkammer besteht aus einem zwecks Erhöhung der Elastizitätsgrenze und Festigkeit kaltverformten Metallmantel aus Aluminium, Stahl, Nickel 0. dgl.

US-A 3 621 882 (Kupiec) lehrt, für die biegsame Wandung federndes, elastisches Material, wie Gummi, Kunststoff oder dünne Metallbälge zu verwenden.

Aus der US-A 3 230 975 (Mercier) ist es ferner bekannt, für die biegsame Wandung einen doppelwandigen Strumpf zu verwenden, dessen Aussenwand aus Gummi oder einem gummielastischen Kunststoff und dessen Innenwand aus Polyurethan oder Polyvinylchlorid besteht.

Der Stand der Technik lehrt, die biegsame metallische Wandung mit federndem Widerstand gegen die Verformung auszuführen oder mit Gummi/Kunststoff-Membranen zu arbeiten.

Obwohl Druckstossdämpfer seit jeher bekannt waren, haben sie in Sanitärinstallationen (Hausinstallationen) noch kaum Eingang gefunden. Dabei treten in Hausinstallationen infolge der Schnellschlussorgane (z. B. der Hebelmischer) Druckstösse von über 20 bar auf, so dass langfristig die Gefahr von Beschädigungen der Installation, insbesondere der Armaturen und der Verbindungsstellen von Kunststoffrohren besteht.

Hausinstallationen erfordern Druckstossdämpfer, deren Wirksamkeit ohne Kontrolle über sehr lange Zeit gewährleistet bleibt, wobei eine zuverlässige Dämpfung sehr unterschiedlicher Druckstösse und eine einwandfreie Langzeitdichtigkeit der Kammer auch bei starker Beanspruchung erforderlich sind. Diese Anforderungen erfüllten die bisherigen Druckstossdämpfer nicht ausreichend.

Aufgabe der Erfindung ist es, eine störungsfreie, zuverlässige Dämpfung der in Hausinstallationen auftretenden Druckstösse über sehr lange Zeit sicherzustellen, so dass die Gefahr von Beschädigungen der Installation vermieden wird.

Die erfindungsgemässe Lösung dieser Aufgabe ist Gegenstand des Anspruchs 1.

Die biegsame metallische Wandung besteht vorzugsweise aus einer tiefgezogenen und nach dem Tiefziehen weichgeglühten Aluminiumfolie, das gummielastische Organ zweckmässig aus einem Elastomer-Organ.

Durch das Zusammenwirken der dünnen Metallfolie mit dem gummielastischen Organ, dessen Verformung die Metallfolie nicht behindert, wird die für Hausinstallationen erforderliche Langzeitdichtigkeit auch bei hoher Druckstoss-Beanspruchung gewährleistet.

In den Figuren 1-4 sind Längsschnitte durch Dämpfungsvorrichtungen dargestellt, die nicht den Gegenstand der Erfindung bilden, aber zur Beschreibung des Anwendungsgebietes beitragen.

Figuren 5 und 6 zeigen Längsschnitte durch Ausführungsbeispiele der erfindungsgemässen Vorrichtung; Fig. 7 schematische Darstellungen von mit unterschiedlichen Anschlussstutzen ausgerüsteten Vorrichtungen mit Beispielen von an die Stutzen anzuschliessenden Anschlussstücken.

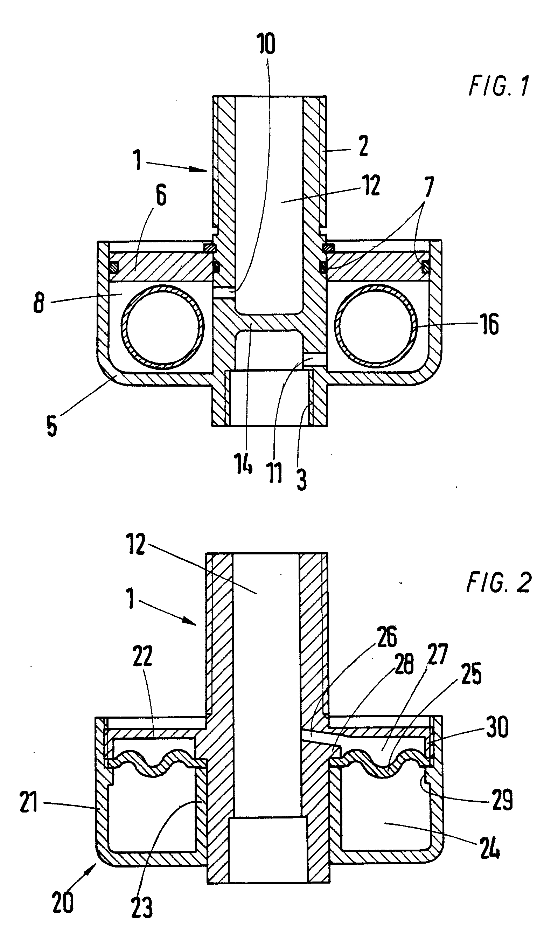

Die in Fig. 1 dargestellte Vorrichtung hat ein Rohrleitungsstück 1, das an beiden Enden mit Anschlussgewinden 2, 3 versehen und dazu bestimmt ist, in eine Frischwasserleitung einer Sanitärinstallation (Hausinstallation) nahe einem Schnellschlussorgan, z. B. zwischen den Ausgang der Wasserleitung und den Eingang eines Hebelmischers, eingesetzt zu werden. Der mittlere Teil des Rohrleitungsstücks 1 ist von einem ringförmigen Gehäuseteil umschlossen, der aus einem einstückig mit dem Rohrleitungsstück 1 gebildeten Topf 5 und einem Deckel 6 besteht, der durch Dichtungsringe 7 am Topfrand und am Rohrmantel abgedichtet ist. Der zwischen dem Gehäuseteil 5, 6 und dem Rohrmantel gebildete Ringraum 8 steht durch zwei in Längsrichtung des Rohrleitungsstücks 1 gegeneinander versetzte Oeffnungen 10, 11 mit dem Innenraum 12 des Rohrleitungsstücks 1 in Verbindung. Der Innenraum 12 ist durch eine zwischen den beiden Oeffnungen 10, 11 angeordnete Trennwand 14 unterteilt, so dass das Wasser zwangsläufig durch den Ringraum 8 strömt. Im Ringraum 8 ist ein mit Druckluft gefüllter Schlauchring 16 aus gummielastischem Material angeordnet. Der Luftdruck im Schlauchring 16 ist etwa gleich gross bemessen wie der Fliessdruck im Rohrleitungsnetz.

Bei einer nicht dargestellten (erfindungsgemässen) Ausführungsform ist das gummmielastische Material des Schlauchrings 16 mit einer dünnen Metallschicht z. B. aus Aluminium beschichtet, wobei die Dichtigkeit auch über sehr lange Zeit sichergestellt ist, d. h. eine Diffusion der Luft durch den Schlauchring verhindert wird.

Die Vorrichtung kann ohne weiteres nachträglich in eine bestehende Sanitärinstallation eines Badezimmers, einer Küche usw. eingesetzt werden, ohne dass das Mauerwerk oder die Mauerverkleidung (Platten, Kacheln) aufgebrochen werden müsste. Man braucht lediglich das Anschlussstück der Armatur von der Wasserleitung abzuschrauben, die Vorrichtung 1 mit dem Anschlussgewinde 2 in die Wasserleitung einzuschrauben bis der Gehäuseteil 5 mit seiner Deckelseite 6 am Mauerwerk bzw. der Mauerverkleidung anliegt, und die Armatur mit Hilfe eines entsprechend bemessenen, in das Anschlussgewinde 3 eingeschraubten Anschlussstücks mit der Vorrichtung zu verbinden. Der Gehäuseteil 5 liegt dann - ästhetisch schön - wie eine übliche Rosette auf dem Mauerwerk bzw. der Mauerverkleidung.

Um den Strömungswiderstand herabzusetzen, kann die Trennwand 14 mit einem Durchlass versehen sein, so dass der Raum 8 einen Nebenschluss bildet.

Bei der in Fig. 2 dargestellten Variante besteht der das Rohrleitungsstück 1 umschliessende Gehäuseteil aus einem im Querschnitt U-förmigen Ring 20, dessen äusserer Schenkel 21 auf eine einstückig am Rohrstück 1 gebildete Ringschulter 22 geschraubt ist, und dessen innerer Schenkel 23 am Rohrmantel anliegt. Im durch den Ring 20 und die Ringschulter 22 umschlossenen Ringraum ist eine Kammer 24 gebildet, welche durch eine ringförmige Membran 25 aus gummielastischem Material vom übrigen, durch eine Bohrung 26 mit dem Inneren 12 des Rohrleitungsstücks in Verbindung stehenden Teil 27 des Ringraums abgeschlossen ist. Der innere Umfangsrand der ringförmigen Membran 25 ist zwischen dem inneren Schenkel 23 des Rings 20 und einem am Rohrmantel gebildeten Vorsprung 28, der äussere Umfangsrand ist zwischen einem Vorsprung 29 am Schenkel 21 und dem abgewinkelten Rand 30 der Ringschulter 22 festgeklemmt. Die Kammer 24 ist mit Druckluft gefüllt, wobei der Luftdruck (bei der fertiggestellten, aber noch nicht ins Rohrleitungsnetz eingesetzten Vorrichtung) etwa dem Betriebsdruck im Rohrleitungsnetz entspricht. Die Breite des Membranrings 25 ist grösser als der Abstand zwischen den Klemmstellen, an denen ihre Umfangsränder eingeklemmt sind, so dass die Membran bei gleichem Druck in der Kammer 24 und dem Raum 27 die in der Zeichnung dargestellte Balgform einnimmt. Sinkt der Druck, baucht sich die Membran 25 in Fig. 2 nach oben aus, steigt er, baucht sie sich nach unten aus und dehnt sich bei weiterem Anstieg des Drucks immer tiefer in die Kammer 24 hinein.

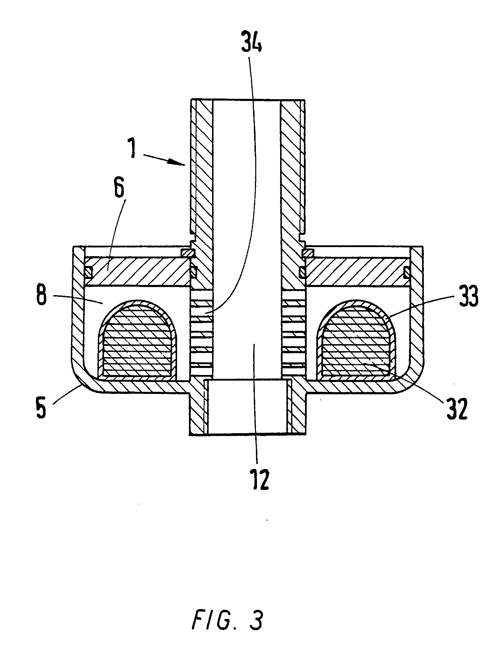

Bei der in Fig. 3 dargestellten Variante ist der das Rohrleitungsstück 1 umschliessende Gehäuseteil 5, 6 gleich wie bei der Ausführungsform von Fig. 1 ausgebildet. Im Ringraum 8 ist anstelle des mit Luft gefüllten Schlauchrings 16 ein aus elastischem, offenzelligem Schaumstoff gebildeter Ring 32 angeordnet. Der offenzellige Schaumstoff ist mit einer wasserdichten Schicht 33 überzogen und diese ist an den Boden des Topfes 5 geklebt. (Wenn anstelle des offenzelligen Schaumstoffs ein geschlossenzelliger Schaumstoff verwendet wird, kann der Ueberzug 33 entfallen). Der gesamte, den Ringraum 8 innen begrenzende Abschnitt des Rohrleitungsstücks 1 ist mit in kleinen Abständen voneinander angeordneten Durchlässen 34 versehen, so dass der Ringraum 8 wie durch ein Gitter oder Netz mit dem Inneren 12 des Rohrleitungsstücks 1 in Verbindung steht.

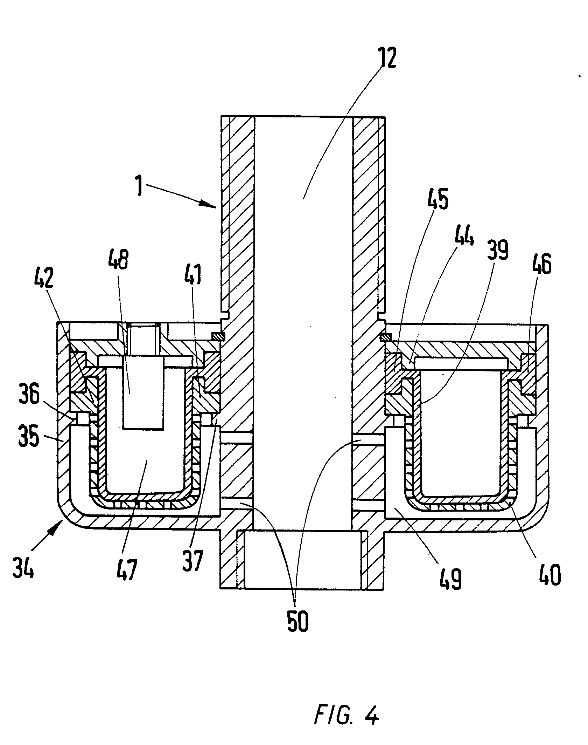

Bei der in Fig. 4 dargestellten Variante haben der das Rohrleitungsstück 1 umschliessende, topfförmige Gehäuseteil 34 an der Innenseite seiner Wandung 35 und das Rohrleitungsstück 1 an der Aussenseite seines Rohrmantels je einen ringförmigen Vorsprung 36, 37. Eine Ringmembran oder Manschette 39 ist in einem im Querschnitt hutförmigen Ringsieb 40 gefasst, dessen innerer und äusserer Umfangsrand 41, 42 auf den Vorsprüngen 36, 37 aufliegt. Der Gehäuseteil 34 ist durch einen eingepressten und durch einen Seeger-Ring gesicherten Deckel 44 abgeschlossen, der die Ränder 45, 46 der Manschette 39 dicht an die Gehäuse- und Rohrwandung sowie die Umfangsränder 41, 42 des Siebs 42 presst. Zum Füllen der zwischen dem Deckel 44 und der Manschette 39 gebildeten, ringförmigen Kammer 47 mit Druckluft ist im Deckel 44 ein Rückschlagventil 48 vorgesehen. Der Luftdruck in der Kammer 47 der fertiggestellten, aber noch nicht ins Rohrleitungsnetz eingesetzten Vorrichtung ist gleich oder etwas kleiner als der Fliessdruck im Rohrleitungsnetz bemessen. Der zwischen der Rohr- und Gehäusewandung sowie dem Sieb 40 gebildete, im Querschnitt U-förmige Ringraum 49 ist durch mehrere, in Längsrichtung des Rohrleitungsstücks 1 gegeneinander versetzte Oeffnungen 50 mit dem Innenraum 12 des Rohrleitungsstücks 1 verbunden. Das Sieb 40 begrenzt das Aufblähen der Manschette 39, so dass eine Ueberbeanspruchung bzw. Ueberdehnung verhindert wird, und der freie U-Ringraum 49 zwischen der Rohr- und Gehäusewandung sowie der Manschette 39 und deren Hut- bzw. U-Querschnittsform ergeben eine gleichmässige Druckverteilung auf die Manschette sowie eine grosse Oberfläche derselben.

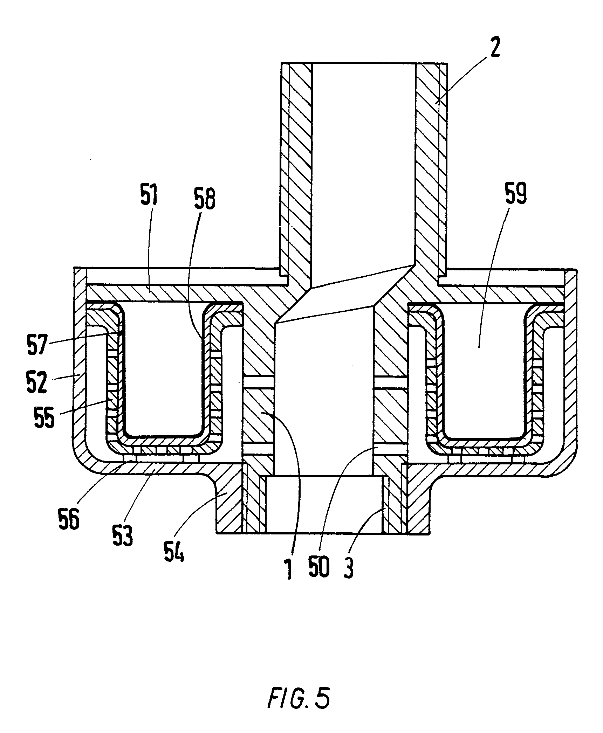

Bei der in Fig. 5 dargestellten Variante hat das Gehäuse zwei axial gegeneinander versetzte Anschlussstutzen 2, 3. Das die Stutzen 2, 3 verbindende Rohrstück 1 hat angrenzend an den Stutzen 2 einen Flansch 51, in dem ein (nicht dargestelltes) Rückschlagventil angeordnet ist. Ein topfförmiger Gehäuseteil 52 hat in der Mitte seines Bodens 53 einen mit einem Innengewinde versehenen Stutzen 54, der auf ein Aussengewinde des Anschlussstutzens 3 geschraubt ist. Auf der Innenseite des Topfbodens 53 ist ein im Querschnitt hutförmiges Ringsieb 55 mittels Füssen 56 abgestützt. Im Ringsieb 55 ist eine im Querschnitt ebenfalls hutförmige Manschette gelagert. Die Manschette besteht aus einem gummielastischen Material 57, das an der Innenseite mit einer Aluminiumschicht 58 beschichtet ist. Die Manschette 57, 58 und der Flansch 51 umschliessen eine durch das Rückschlagventil im Flansch 51 mit Druckluft gefüllte Kammer 59. Die Dichtigkeit der Kammer 59 ist dadurch gewährleistet, dass der Rand der Manschette 57, 58 vom Rand des Ringsiebs 55 an den Flansch 51 gepresst ist. Die Pressung erfolgt beim Anschrauben des Stutzens 54 auf den Anschlussstutzen 3, indem der Topfboden 53 das mit den Füssen 56 versehene Sieb 55 nach oben gegen den Flansch 51 presst. Der gummielastische Teil 57 der Manschette besteht zweckmässig aus einem im Pressverfahren geformten Elastomer (z. B. Nitrilkautschuk NBR, Polyolefinkautschuk EPDM).

Die Aluminiumschicht 58 besteht aus einer tiefgezogenen Aluminiumfolie, die in den Teil 57 eingesetzt und vorzugsweise zumindest am Rand mit dem Teil 57 verklebt oder verschweisst (versiegelt) ist. (Die Aluminiumschicht 58 könnte auch auf den Manschettenteil 57 aufgedampft sein, entweder nur an der Innenseite oder zusätzlich auch noch an der Aussenseite). Die Aluminiumfolie 58 gewährleistet, dass der Luftdruck in der Kammer 59 während praktisch unbegrenzter Zeit zuverlässig aufrechterhalten wird, d.h. keine Luftdiffusion durch Poren des gummielastischen Teils 57 stattfinden kann. Die Aluminiumfolie bzw. -schicht 58 ist so dünn gewählt, dass sie die Verformbarkeit des gummielastischen Teils 57 praktisch nicht beeinträchtigt. Die auf eine sehr geringe Dicke ausgewalzte und tiefgezogene Aluminiumfolie 58 ist nach dem Tiefziehen weichgeglüht worden, damit sie die ihr durch das Auswalzen und Tiefziehen verliehene Steifigkeit wieder verliert, d.h. möglichst gut biegsam wird. Der gummielastische Teil 57 könnte auch mit einem anderen Metall beschichtet sein. Die auf eine sehr geringe Dicke ausgewalzte, tiefgezogene und nach dem Tiefziehen weichgeglühte Aluminiumfolie hat sich aber sowohl hinsichtlich der Dichtigkeit als auch der Verformbarkeit als besonders gut geeignet erwiesen.

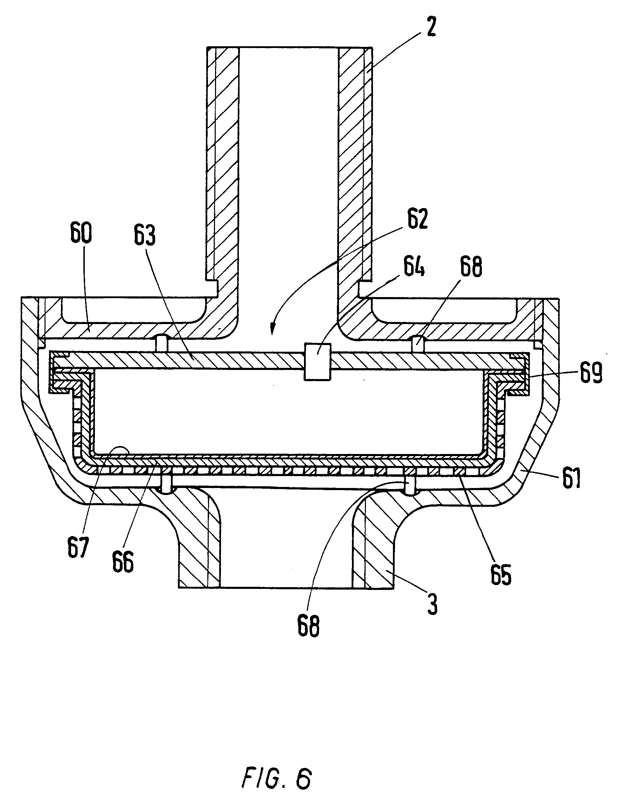

Bei der in Fig. 6 dargestellten Variante besteht das Gehäuse aus zwei Teilen. Der erste Teil hat einen in eine Wasserleitung zu schraubenden Anschlussstutzen 2, an dem ein Flansch 60 mit Aussengewinde gebildet ist. Der zweite Teil hat einen an ein Anschlussstück einer Armatur anzuschliessenden Stutzen 3, der im Boden eines topfförmigen Gehäuseteils 61 gebildet ist. Der Rand des topfförmigen Gehäuseteils 61 ist mit einem Innengewinde versehen und auf das Aussengewinde des Flanschs 60 geschraubt. In den Innenraum des Gehäuseteils 61 ist eine Kapsel 62 eingesetzt. Die Kapsel 62 hat einen Deckel 63, in dem ein Füllstützen oder ein Rückschlagventil 64 sitzt, und ein hutförmiges Sieb 65, in dem eine ebenfalls hutförmige Membran gelagert ist. Die Membran besteht ebenso wie die Manschette 57, 58 in Fig. 5 aus einem gummielastischen Material 66, dessen Innenseite mit einer Aluminiumschicht 67 beschichtet ist. Die Dicke und der Durchmesser der Kapsel 62 sind kleiner bemessen als der Raum zwischen dem Gehäuseteil 61 und dem Flansch 60. Am Deckel 63 und am Siebboden 65 sind Stege 68 angebracht, die in Vertiefungen des Gehäuseteils 61 und des Flansches 60 greifen und die Kapsel 62 in einem Abstand vom Flansch 60 und dem Gehäuseteil 61 halten, so dass das Wasser vom Stutzen 2 um die Kapsel 62 herum durch den Innenraum des Gehäuseteils 61 in den Stutzen 3 strömen kann. Die Ränder des Siebs 65, der Membran 66, 67 und des Deckels 63 sind dicht miteinander verklebt oder verschweisst und zusätzlich mit einem Dichtungsring 69 abgedichtet. Die vom Deckel 63 und der Membran 66, 67 umschlossene Kapselkammer ist mit Druckluft gefüllt.

Die Kapsel 62 wird vor dem Einsetzen in das Gehäuse vollständig fertiggestellt und durch den Einfüllstutzen 64 mit Druckluft gefüllt, worauf der Einfüllstutzen mit Dichtungsmasse versiegelt wird. Die Kapsel 62 wird dann in den Gehäuseteil 61 eingesetzt und dieser mit dem Innengewinde seines Rands auf das Aussengewinde des Flanschs 60 geschraubt. Dabei wird der Rand der Membran 66, 67 zwischen den Rändern des Deckels 63 und des Siebs 65 zusammengepresst, weil der Boden des Gehäuseteils 61 das Sieb 65 über die Stege 68 gegen den mit den Stegen 68 am Flansch 60 abgestützten Deckel 63 presst. Durch diese Verpressung bleibt die Dichtigkeit der Verbindung der Membran 66, 67 mit dem Deckel 63 über praktisch unbegrenzte Zeit gesichert.

Das in jeder der Vorrichtungen im Gehäuseraum vorgesehene, elastisch zusammendrückbare Mittel (der mit Luft gefüllte Schlauchring 16 in Fig. 1; das Luftpolster in der Kammer 24 mit der Membran 25 in Fig. 2; der Schaumstoffring 32 in Fig. 3; das Luftpolster in der Kammer 47 mit der Membran 39 in Fig. 4; das Luftpolster in der Kammer 59 mit der Manschette 57, 58 in Fig. 5; das Luftpolster in der Kapsel 62 mit der Membran 66, 67 in Fig. 6) reduziert die in Hausinstallationen infolge des raschen Schliessens von Schnellverschlussorganen, z. B. Hebelmischern, entstehenden Druckstösse. Die Luftpolster im Schlauchring 16 und der Kammer 24, 49, 59, 62 haben den Vorteil, dass sie den Druckstoss sehr rasch aufnehmen, der Schaumstoff 32 hat den Vorteil einer grösseren Reibung und damit besseren Dämpfung von Druckschwingungen. Im Gehäuseraum können auch mehrere elastisch zusammendrückbare Mittel, z. B. ein mit Luft gefüllter Schlauchring und ein Schaumstoffring angeordnet sein, um sowohl eine rasche Druckaufnahme als auch eine gute Schwingungsdämpfung zu erzielen. Da der Raum in einem radial über die Rohranschlussteile 2, 3 vorstehenden Gehäuseteil gebildet ist, lässt sich das elastisch zusammendrückbare Mittel genügend gross bemessen, um auch sehr hohe Druckstösse ausreichend zu reduzieren. Für die Druckreduzierung kommt es entscheidend sowohl auf die Grösse des zusammenpressbaren Volumens (des Luftvolumens im Schlauchring 16 bzw. den Kammern 24, 47, 59 oder des Schaumstoffvolumens 32) als auch der verformbaren Fläche (elastische bzw. biegsame Wandung 16, 25, 33, 39, 57/58, 66/67) an. Die Druckstossdämpfung ist umso besser, je grösser das Volumen und die verformbare Fläche sind. Vorzugsweise ist der Aussendurchmesser des Gehäuseteils, in dem der Raum für die Aufnahme des elastisch zusammendrückbaren Mittels gebildet ist, mindestens doppelt so gross wie der Aussendurchmesser der Anschlussstutzen. Bei den Ausführungsbeispielen beträgt der Aussendurchmesser des Gehäuseteils 5, 20, 34, 52, 61 das Dreifache des Aussendurchmessers der Stutzen 2, 3. Versuche haben gezeigt, dass z. B. mit der Ausführungsform von Fig. 4 Druckspitzen von 26 bar auf 8,5 bar reduziert werden. Der Gehäuseteil 5, 20, 34, 52, 61 kann, wie dargestellt, formschön gestaltet und ausserhalb des Mauerwerks wie eine Rosette montiert werden. Die dargestellten Vorrichtungen können auch nachträglich leicht ohne Aenderung der Installation eingebaut werden.

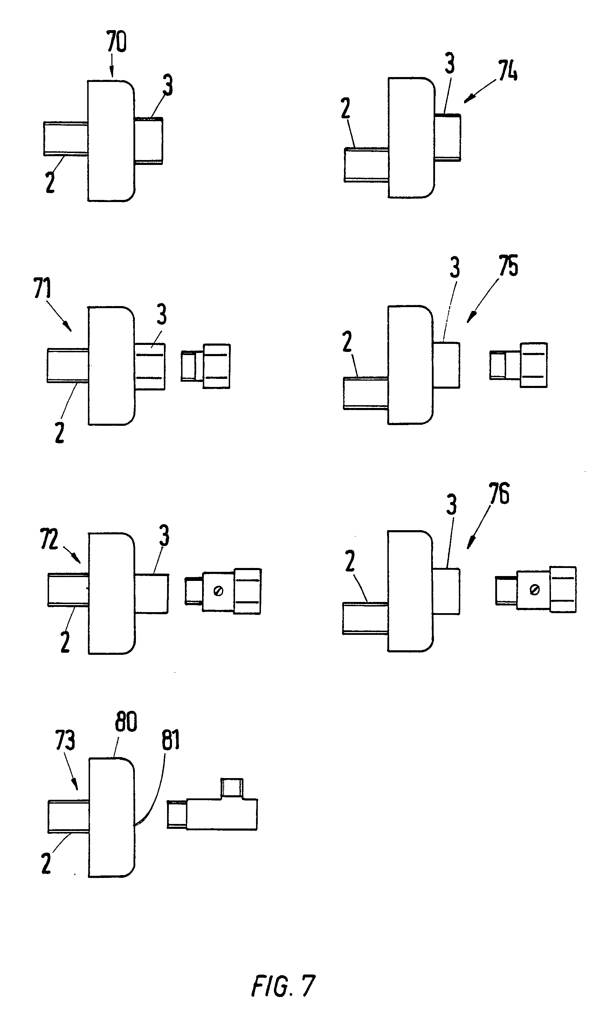

Fig. 7 zeigt schematisch, wie man die Vorrichtung zum Anschluss verschiedener Anschlussstücke ausgestalten kann. Die Vorrichtungen 70-72 haben entsprechend den Ausführungsbeispielen von Fig. 1-4 und 6 zum Anschlussstutzen 2 für die Wasserleitung koaxiale Anschlussstutzen 3, die je nach dem vorgesehenen Anschlussstück mit Aussengewinde (Stutzen 3 von 70) oder Innengewinde (Stutzen 3 von 71 und 72) ausgeführt sind. Die Vorrichtung 73 hat im Gehäuseteil 80 ein zum Anschlussstutzen 2 für die Wasserleitung koaxiales Innengewinde 81 für das Einschrauben z. B. eines Eckstücks. Die Vorrichtungen 74-76 haben axial gegeneinander versetzte Anschlussstutzen 2, 3 und sind zum Anschluss von Warm- und Kaltwasserarmaturen mit unterschiedlichem Installationsstichmass bestimmt, wobei der Abstand der Stutzen 3 zweier nebeneinander montierter Vorrichtungen 74-76 durch entsprechendes Drehen der beiden Vorrichtungen einstellbar ist.

## Ansprüche

1. Vorrichtung zum Dämpfen von Druckstössen in Rohrleitungen, insbesondere Sanitärinstallationen, mit einem Gehäuse (1, 5, 6; 1, 20; 1, 34, 44; 2, 3, 51, 52; 2, 3; 60, 61) das zwei Rohranschlussteile (2, 3; 2, 81) und einen mit diesen in Verbindung stehenden Raum (8; 27; 49) aufweist, in dem eine mit Druckgas, z. B. Druckluft, gefüllte, eine wenigstens teilweise biegsame metallische Wandung (58; 67) aufweisende Kammer (16; 24, 25; 32, 33; 39, 47; 57-59; 66, 67) angeordnet ist, dadurch gekennzeichnet, dass die biegsame metallische Wandung (58; 67) an einem gummielastischen Organ (57; 66) angeordnet und so dünn bemessen ist, dass sie dessen Verformbarkeit nicht beeinträchtigt.

2. Vorrichtung nach Anspruch 1, dadurch gekennzeichnet, dass die metallische Wandung aus einer Metallfolie (58; 67) besteht.

3. Vorrichtung nach Anspruch 2, dadurch gekennzeichnet, dass die metallische Wandung aus einer Aluminiumfolie (58; 67) besteht.

4. Vorrichtung nach Anspruch 3, dadurch gekennzeichnet, dass die metallische Wandung aus einer tiefgezogenen und nach dem Tiefziehen weichgeglühten Aluminiumfolie (58; 67) besteht.

5. Vorrichtung nach einem der Ansprüche 1 - 4, dadurch gekennzeichnet, dass das gummielastische Organ (57; 66) aus einem Elastomer besteht.

6. Vorrichtung nach einem der Ansprüche 1 bis 5, dadurch gekennzeichnet, dass die Kammer einen Ringraum (47; 59) umschliesst, die biegsame metallische Wandung (58; 67) zusammen mit dem gummielastischen Organ (57; 66) im Querschnitt U-förmig und von der Gehäusewandung (1, 34; 52) distanziert ist, und die U-Schenkel der biegsamen Wandung (58, 67) durch einen festen Gehäuseteil (44; 51) verbunden sind.

7. Vorrichtung nach einem der Ansprüche 1 bis 5, dadurch gekennzeichnet, dass die Kammer durch einen Schlauchring (16) gebildet ist.

8. Vorrichtung nach einem der Ansprüche 1 bis 7, dadurch gekennzeichnet, dass der Druck des Gases bzw. der Luft annähernd gleich gross wie der Fliessdruck im Rohrleitungsnetz ist.

9. Vorrichtung nach einem der Ansprüche 1-8, dadurch gekennzeichnet, dass das gummielastische Organ (57; 66) in einem Sieb (40; 55; 65) angeordnet ist.

10. Vorrichtung nach einem der Ansprüche 1 bis 9, dadurch gekennzeichnet, dass der Raum (8; 49) durch mindestens zwei in Längsrichtung des Rohrleitungsstücks (1) gegeneinander versetzte Oeffnungen (10, 11; 34; 50) mit dessen Inneren (12) in Verbindung steht.

FIG. 1

FIG. 2

FIG. 3

EP 0 373 155 A2

FIG. 4

FIG. 5

FIG. 6

FIG. 7